# EUROPÄISCHE PATENTSCHRIFT

(11) **EP 2 912 072 B1**
(45) Veröffentlichungstag und Bekanntmachung des Hinweises auf die Patenterteilung: **05.10.2016**
(21) Anmeldenummer: 13788907.7
(22) Anmeldetag: 15.10.2013
(51) Int. Cl.: C08B 30/16, C08B 30/18, B01J 19/18, B01D 29/88, C09J 103/02

(54) **VORRICHTUNG UND VERFAHREN ZUR VERMEIDUNG VON ABWASSER BEI KONTINUIERLICHEN ENZYMATISCHEN STÄRKE-ABBAUANLAGEN**
DEVICE AND METHOD FOR PREVENTING WASTE WATER IN CONTINUOUS ENZYMATIC STARCH DECOMPOSITION SYSTEMS
DISPOSITIF ET PROCÉDÉ POUR ÉVITER LES EAUX RÉSIDUAIRES DANS DES INSTALLATIONS DE DÉGRADATION ENZYMATIQUE D'AMIDON EN CONTINU

(30) Priorität: 26.10.2012 DE 102012110282
(43) Veröffentlichungstag der Anmeldung: 02.09.2015
(73) Patentinhaber: BVG Bauer Verfahrenstechnik GmbH, 89626 Greifenberg (DE)
(72) Erfinder: BAUER, Joachim, 86926 Greifenberg/Ammersee (DE); PILANA, Shemsi, 86836 Graben (DE)
(74) Vertreter: Wittmann, Ernst-Ulrich
(86) Internationale Anmeldenummer: PCT/EP2013/071503
(87) Internationale Veröffentlichungsnummer: WO 2014/063956

(56) Entgegenhaltungen:
- DE-A1- 2 159 315
- DE-A1- 3 731 293
- DE-A1-102012 101 992
- US-A1- 2010 159 104

## Beschreibung

Die vorliegende Erfindung betrifft ein Verfahren und eine Vorrichtung zur Aufbereitung von Stärke, insbesondere zur Reduzierung bzw. Vermeidung von Abwasser bei der Aufbereitung von Stärke.

Im Stand der Technik sind Vorrichtungen und Verfahren zur Aufbereitung von Stärke bekannt, bei welchen die Stärke entweder mit einem thermooxidativen oder enzymatischen Verfahren aufgeschlossen wird.

Beim enzymatischen Stärkeabbaubau in der Praxis werden sowohl diskontinuierliche als auch kontinuierliche Verfahren angewendet. Der Schwerpunkt mit über 90 % Marktanteil liegt heute beim kontinuierlichen Abbau.

Beim kontinuierlichen enzymatischen Stärkeabbau unterscheidet man verschiedene Ausführungsformen des Reaktionsbehälters (Abbaukonverter oder Konverter). Es gibt sogenannte Plug-Flow-Konverter mit laminarer Strömung, als auch Konverter mit turbulenter Strömung oder auch Hochturbulenzströmung.

In allen Verfahren erfolgt der Abbauprozess an der gelösten Stärke (Stärkekleister) mit Enzymen, unter definierten Prozessbedingungen, bzgl. Temperatur, pH-Wert und Reaktionsdauer. Um den Abbau des Stärkemoleküls bis zur Glucose zu vermeiden, da die Wirksamkeit des Stärkekleisters damit beeinträchtigt wird, muss nach Erreichen vorgegebener Zieleigenschaften der Abbauprozess beendet werden. Das erfolgt vorzugsweise in einer zweiten Stufe, der thermischen Inaktivierung bei 100 °C bis 140 °C.

Bei der im Stand der Technik bekannten kontinuierlichen Herstellung von abgebautem Stärkekleister ergibt sich aber das Problem, dass beim Start der thermischen Inaktivierung der Stärkekleister so lange nicht in Lagerungsbehältern eingeleitet oder zur Verarbeitung weitergeleitet werden kann, bis die Inaktivierungstemperatur von min. 100 °C im Stärkekleister erreicht ist. Aus diesem Grund wird bei den im Stand der Technik bekannten Vorrichtungen und Verfahren der nicht zuverlässig inaktivierte Stärkekleister, bei welchem insbesondere in der Startphase der Inaktivierung das vorgegebene Temperaturniveau nicht erreicht wurde, ausgeschleusst und verworfen, d.h. der Stärkekleister wird z.B. als Abwasser in die Kanalisation eingeleitet. Erst wenn das Temperaturniveau zuverlässig erreicht wurde, wird der Stärkekleister in einen Lagerbehälter oder zur Weiterverarbeitung weitergeleitet. Erfolgt dies zu früh besteht die Gefahr, dass die Enzyme unkontrolliert mit der Stärke weiter reagieren und Glucose entsteht, wodurch der Stärkekleister unbrauchbar wird.

Die Aufheizphase in der thermischen Inaktivierung kann beim Anlauf der Inaktivierungsvorrichtung, je nach den Verfahrensbedingungen, mehrere Minuten betragen. Während dieser Zeit wird der nicht sicher inaktivierte Stärkekleister verworfen. Damit wird aber nicht nur die Kläranlage belastet, sondern es entstehen auch Kosten für das verworfene Produkt und die hierzu aufgewendete Energie. Aufgabe der vorliegenden Erfindung ist es, die im Stand der Technik bekannten Nachteile bei der kontinuierlichen Aufbereitung von Stärke wenigstens teilweise zu reduzieren oder vollständig zu vermeiden.

Gelöst wird die Aufgabe der vorliegenden Erfindung mit der Vorrichtung nach Anspruch 1 und dem Verfahren nach Anspruch 7 Bevorzugte Ausgestaltungsformen der beanspruchten Erfindung sind Gegenstand der Unteransprüche.

Die erfindungsgemäße Vorrichtung zum kontinuierlichen, enzymatischen Aufschluss von Stärke umfasst wenigstens einen Reaktionsbehälter, in welchem der Stärkekleister durch die Reaktion der Enzyme unter vorgegebenen Prozessbedingungen abgebaut wird. Die Vorrichtung weist eine erste Transportstrecke für einen Volumenstrom des Stärkekleisters auf, wobei diese Transportstrecke neben einer Pumpe auch eine Inaktivierungsvorrichtung aufweist, bei welcher Dampf in den Stärkekleister eingebracht wird und u.a. durch die freigesetzte Kondensationswärme der Stärkekleister erhitzt wird. Ferner umfasst die Vorrichtung ggf. auch einen Vorratsbehälter, in welchem der thermisch inaktivierte Stärkekleister, bevor dieser weiterverarbeitet wird, aufgenommen wird.

Dabei ist insbesondere auch zu berücksichtigen, dass sowohl der Reaktionsbehälter als auch der Vorratsbehälter in einem breiten Verständnis ausgestaltet werden können, wobei hierunter auch Transportwege wie zum Beispiel Rohrleitungssysteme verstanden werden können. Es liegt somit auch im Sinn der vorliegenden Erfindung den Stärkekleister on-Demand (auf Bedarf) herzustellen und im Anschluss zeitnah (ggf. sofort) weiter zu verarbeiten.

Gemäß der beanspruchten Vorrichtung dient die erste Transportstrecke einer sog. Kreislaufführung des Stärkekleisters zwischen dem Reaktionsbehälter, der Pumpe und der Inaktivierungsvorrichtung, in welcher der Stärkekleister insbesondere während der Startphase (in der die Inaktivierungsvorrichtung aufgeheizt wird) zurück in den Reaktionsbehälter geführt wird. Neben der ersten Transportstrecke weist die Vorrichtung auch eine zweite Transportstrecke auf, welche mit der ersten Transportstrecke nach der Inaktivierungsvorrichtung in der Art verbunden ist, dass insbesondere nach Erreichen einer vorgegebenen Inaktivierungstemperatur (z.B. größer 100°C) der Stärkekleister aus der ersten Transportstrecke über die zweite Transportstrecke in den Vorratsbehälter oder zur Verarbeitung abgeführt werden kann.

Hierzu sind die beiden Transportstrecken vorteilhafterweise mit einem T-Stück und zwei Ventilen verbunden. Die beiden Ventile können in Abhängigkeit der Stärkekleistertemperatur in oder nach der Inaktivierungsvorrichtung gesteuert und/oder geregelt werden und ermöglichen zwischen einer Kreislaufschaltung oder einer Weiterleitung des Stärkekleisters umzuschalten. Alternativ kann dies aber auch mittels einem geeignetem Dreiwegeventil erfolgen. Vorzugsweise sind der Reaktionsbehälter und/oder der Vorratsbehälter mit einem Rührwerk und/oder einer Temperaturregelung ausgestattet. Letztere ist vorteilhafterweise auch ein System, bei welchem Dampf in die Suspension oder die Lösung zum Erwärmen eingeleitet wird.

Insbesondere das im Reaktionsbehälter angeordnete Rührwerk wird bevorzugt über einen Motor angetrieben, der durch den Erhalt von Signalen aus einer Steuereinheit regulierbar ist. Weiterhin bevorzugt kann das Reaktionsgefäß Schikanen oder andere Strömungsbrecher aufweisen, welche geeignet sind, den Strömungszustand im Reaktionsgefäß zu verringern (laminare Strömung im Plug Flow) oder zu verstärken (turbulente Strömung im Turbulenzverfahren).

Bevorzugte regulierbare Zustände im Reaktionsgefäß sind gemäß der vorliegenden Erfindung die Temperatur und der pH-Wert der das Enzym enthaltenden Stärkesuspension, die Stärkekonzentration und die Enzymmenge und Enzymkonzentration.

Die Erfindung wird auch durch ein Verfahren zum kontinuierlichen Aufschluss von Stärke mittels Enzymen gelöst, welches die folgenden Schritte aufweist:
- Mischen einer Stärke-Wassersuspension und/oder des Stärkekleisters mit einem Enzym;
- Enzymatischer Abbau des Stärkekleisters in einem Reaktionsbehälter;
- Entnahme eines Volumenstroms von Stärkekleister aus dem Reaktionsbehälter und Erwärmung des Volumenstroms in einer Inaktivierungsvorrichtung;
- Bestimmung der Temperatur des Stärkekleisters in und/oder nach der Inaktivierungsvorrichtung;
- Rückführung des Volumenstroms in den Reaktionsbehälter bis zum Erreichen einer vorgegebenen Temperatur des Stärkekleisters nach der Inaktivierungsvorrichtung;
- Weiterleitung des Volumenstroms von Stärkekleister in einen Vorratsbehälter oder zur Weiterverarbeitung nach Erreichen einer vorgegebenen Temperatur des Stärkekleisters nach der Inaktivierungsvorrichtung.

Dabei kann das Mischen und Lösen der Stärke mit dem Wasser und ggf. auch die Zugabe des Enzyms und/oder sonstiger Hilfsmittel und/oder Additive auch außerhalb des Reaktionsbehälters erfolgen. Diese Mischung wird dann als vorgefertigte Lösung in den Reaktionsbehälter eingebracht. Im Reaktionsbehälter erfolgt die Umsetzung d.h. der Abbau des Stärkekleisters unter vorgegebenen Bedingungen wie Temperatur, Stärkekonzentration, Verweilzeit, Enzymmenge und pH-Wert. Sobald die Startreaktion abgeschlossen oder ein vorgesehenes Niveau des Stärkeabbaus erreicht ist - dies kann beispielsweise über die Viskosität des Stärkekleisters bestimmt werden und wird meist über die Reaktionsdauer und Enzymmenge beeinflusst - wird der geregelte Volumenstrom an Stärkekleister dem Reaktionsbehälter entnommen und zur Inaktivierung der Enzyme durch Erwärmung in eine Inaktivierungsvorrichtung geführt. In dieser wird der Stärkekleister im Durchströmverfahren durch Zugabe von Dampf erwärmt und erfindungsgemäß so lange im Kreislauf zum Reaktionsbehälter zurück geführt, bis das geforderte Temperaturniveau des Stärkekleisters erreicht ist, bei welchem von einer ausreichenden Inaktivierung der Enzyme ausgegangen werden kann. Sobald dieses Temperaturniveau erreicht ist wird die Kreislaufführung unterbrochen und der Volumenstrom des inaktivierten Stärkekleisters in den Vorratsbehälter weitergeleitet.

Die geforderte Temperatur zur Inaktivierung der Enzyme liegt bei größer 100°C, bevorzugt bei 115°C bis 140 °C und besonders bevorzugt auch bei größer 140°C.

Die Temperatur im Reaktionsbehälter und u.a. bei der Kreislaufführung liegt nach der Startphase des Systems gemäß einer weiteren besonders bevorzugten Ausführungsform zwischen 75 °C und 95 °C. Grundsätzlich liegt sie niedriger als die Inaktivierungstemperatur in der Inaktivierungsvorrichtung.

Gemäß der vorliegenden Erfindung wird das Verfahren zum kontinuierlichen Abbau von Stärke so eingestellt, dass beim Start der Inaktivierung der Stärkekleister so lange zurück in den Reaktionsbehälter (Abbaukonverter) gefördert wird, bis die Inaktivierungstemperatur erreicht ist. Ist diese erreicht wird der Stärkekleister in den Vorratsbehälter oder zur Weiterverarbeitung gefördert d.h. die Transportstrecke wird von der Kreislaufführung auf die Weiterführung umgeschaltet. Auf diese Weise wird Abwasser und Produktverlust verhindert.

Darüber hinaus liegt es im Sinn der vorliegenden Erfindung, dass, wenn die Anlage gestoppt wird, z.B. wenn der Vorratsbehälter voll ist und/oder der Abbaukonverter entleert werden soll, um einen Abbau der Stärkemoleküle bis zur Glucose zu verhindern. Ist der Abbaukonverter leer, setzt ein Spülprogramm ein und die direkte Dampfeinspeisung in die Inaktivierung wird gestoppt. Sinkt die Temperatur in der Inaktivierung unter den vorgegebenen Grenzwert von z.B. 100° bis 130 °C, schließt das Ventil der Transportstrecke in den Vorratsbehälter bzw. zur Weiterverarbeitung und das Ventil zur Kreislaufführung öffnet. Damit wird das Spülwasser zurück in den Reaktionsbehälter (Abbaukonverter) gefördert. Im Stand der Technik wurde auch dieses Spülwasser, das noch mit Stärke versetzt ist, als Abwasser in die Kanalisation geleitet.

Vorzugsweise erfolgt der enzymatische Abbau mit einer Vorrichtung gemäß der vorliegenden Erfindung kontinuierlich, wobei es auch im Sinn der vorliegenden Erfindung ist, dass einzelnen Abschnitte wie beispielsweise die Reaktion des Enzyms mit der Stärke auch im Sinne einer "Zwischenlagerung" erfolgen können.

Die Erfindung umfasst auch die Verwendung der Vorrichtung mit den Unteransprüchen zur Durchführung des Verfahrens und insbesondere auch die Herstellung einer enzymatisch abgebauten Stärke für den Einsatz in der Papier-, Karton- oder Pappenindustrie, bei Herstellung von Lebensmitteln, Arzneimitteln, Streichfarben und dergleichen.

Weitere Aspekte der Erfindung ergeben sich aus der nachfolgenden detaillierten Beschreibung einer möglichen Ausführungsform der Erfindung in Verbindung mit den Zeichnungen sowie den Ansprüchen. Es wird darauf hingewiesen, dass durch dieses Beispiel Abwandlungen beziehungsweise Ergänzungen wie sie sich für den Fachmann unmittelbar ergeben mit umfasst sind. Darüber hinaus stellt das bevorzugte Ausführungsbeispiel keine Beschränkung der Erfindung dar, so dass auch Abwandlungen und Ergänzungen im Umfang der vorliegenden Erfindung liegen.

Dabei zeigen:
Figur 1 eine Vorrichtung zur Herstellung von enzymatisch abgebauter Stärke gemäß dem Stand der Technik, und
Figur 2 eine erfindungsgemäße Vorrichtung zur kontinuierlichen Herstellung von enzymatisch abgebauter Stärke.

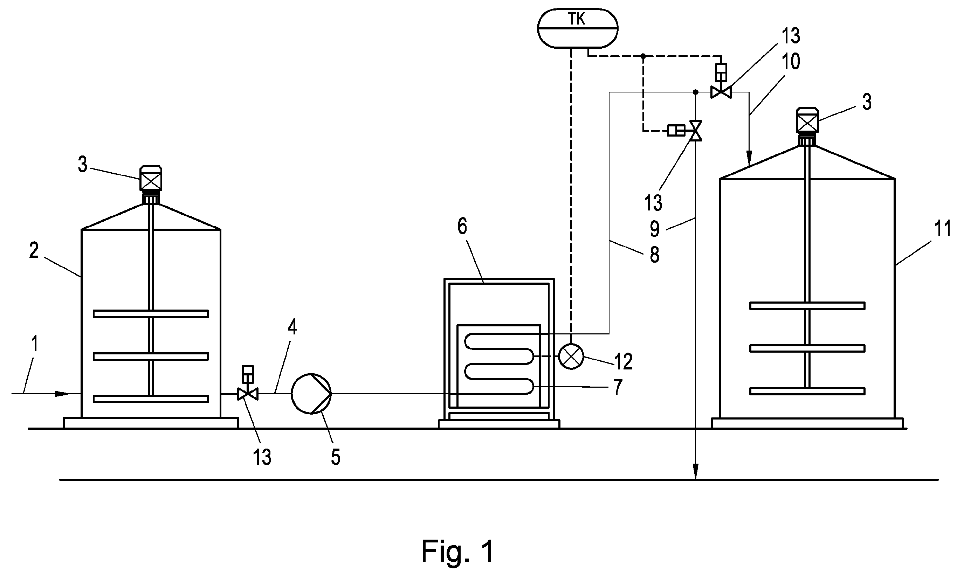

Figur 1 zeigt den derzeit bekannten Stand der Technik zur Herstellung von enzymatisch abgebauter Stärke, bei welchem eine Stärkesuspension (Wasser und Stärke ggf. mit Enzym oder alternativ wird das Enzym im Reaktionsbehälter, hier Abbaukonverter, beigemischt) in den Abbaukonverter eingebracht wird und dort die Stärke mittels des Enzyms über eine vorgegebene Zeit unter ständigem Rühren und bestimmten Prozessparametern (Temperatur, pH-Wert, Konzentration/en) abgebaut wird. Sind die Zielwerte der abgebauten Stärke (z.B. Viskosität) erreicht, wird die jetzt als Stärkekleister bezeichnete Lösung über die Leitungen 4 und 7 zur Inaktivierung in der Inaktivierungsvorrichtung 6 gepumpt. Hat die Lösung einen vorgegebenen

Temperaturgrenzwert überschritten, welcher mit dem Sensor 12 ermittelt wird, so wird die Lösung über die Leitungen 8 und 10 in den Vorratsbehälter 11 gepumpt. Andernfalls wird die Lösung über die Leitungen 8, 9 in den Kanal abgeführt d.h. verworfen. Mit den Bezugszeichen 13 sind Ventile zum Öffnen und Schließen der Leitungen bzw. Entnahmeöffnungen bezeichnet.

Damit wird deutlich, dass beim Einschalten der Inaktivierung das Kanalventil der Leitung 9 geöffnet ist und durch die Zugabe von Dampf der Stärkekleister in der Inaktivierungsvorrichtung aufgeheizt wird. Der Aufheizvorgang, der wenige Sekunden und bis zu mehreren Minuten dauern kann, wird mit einem Temperatursensor 12 gemessen bzw. verfolgt. Ist die Temperatur auf ca. 100 °C gestiegen, wird das Kanalventil der Leitung 9 geschlossen und das Produktventil der Leitung 10 geöffnet. Erst ab diesem Zeitpunkt wird kein Produkt mehr in den Kanal verworfen und der fertige Stärkekleister kann zur Weiterverarbeitung oder Lagerung abgeführt werden.

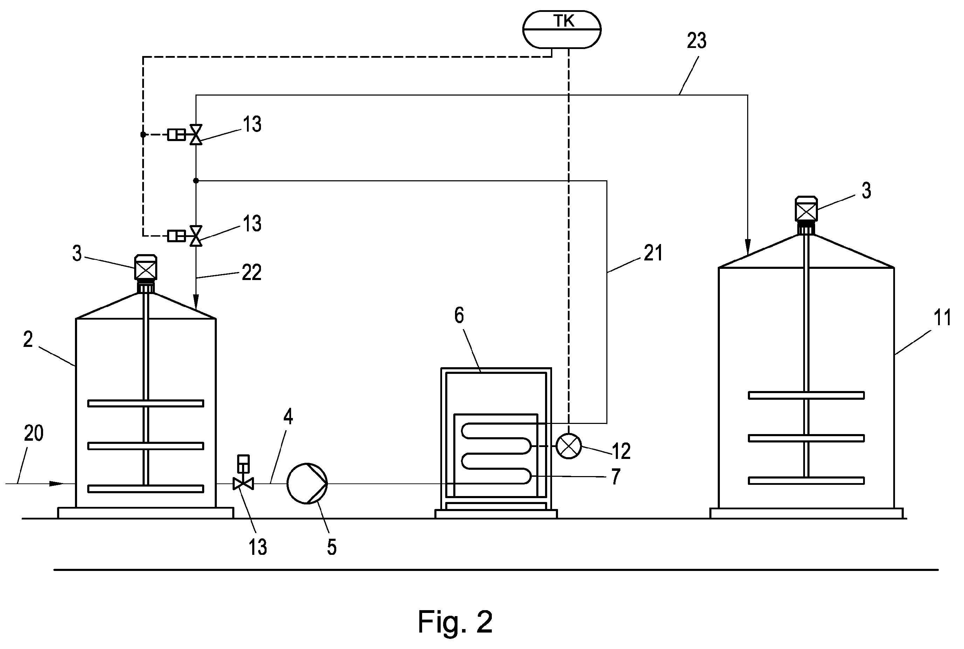

In Figur 2 ist eine mögliche Ausführungsform der Erfindung dargestellt, mit welcher insbesondere kein Produkt d.h. Stärkekleister verworfen werden muss und damit neben dem Produkt auch Energie eingespart werden kann.

Auch bei dieser Vorrichtung wird eine Stärkesuspension in den Abbaukonverter 2 eingebracht. Hier wird die Stärke mittels des Enzyms über eine vorgegebene Zeit unter ständigem Rühren und bestimmten Prozessparametern (Temperatur, pH-Wert, Konzentration/en) abgebaut. Sind die Zielwerte der abgebauten Stärke (z.B. Viskosität) erreicht, wird die jetzt als Stärkekleister bezeichnete Lösung über die Leitungen 4 und 7 zur Inaktivierung in die Inaktivierungsvorrichtung 6 gepumpt. Im Gegensatz zum Stand der Technik wird nun aber der Stärkekleister mit der Leitung 21 und 22 in den Abbaukonverter so lange zurückgeführt, bis das mit dem Sensor ermittelte Temperaturniveau des Stärkekleisters einen Bereich erreicht hat, bei welchem die Inaktivierung der Enzyme gewährleistet ist. Sobald dieser Wert, beispielsweise 100°C erreicht ist, wird gemäß dem hier dargestellten Ausführungsbeispiel die Kreislaufführung mittels dem Ventil der Leitung 22 geschlossen und der inaktivierte Stärkekleister in den Vorratsbehälter 11 über die Leitung 23 gepumpt. Selbstverständlich kann der so gewonnene Stärkekleister auch direkt weiterverarbeitet werden.

## Patentansprüche

1. Vorrichtung zum kontinuierlichen enzymatischen Aufschluss von Stärke mit einem Reaktionsbehälter (2) zum Erzeugen von enzymatisch abgebautem Stärkekleister, einer ersten Transportstrecke (4, 7, 21, 22) für einen Volumenstrom des Stärkekleisters mit wenigstens einer Pumpe (5) und einer Inaktivierungsvorrichtung (6) zum Aufheizen des Stärkekleisters, **dadurch gekennzeichnet, dass**
die erste Transportstrecke (4, 7, 21, 22) eine Kreislaufführung des Stärkekleisters zwischen Reaktionsbehälter, (2) Pumpe (5) und Inaktivierungsvorrichtung (6) bereitstellt und eine zweite Transportstrecke (23) vorgesehen ist, mittels welcher wenigstens ein Teilstrom des Stärkekleisters aus der ersten Transportstrecke (4, 7, 21, 22) nach der Inaktivierungsvorrichtung (6) in einen Vorratsbehälter (11) oder zur Weiterverarbeitung überführt wird,
wobei in und/oder nach der Inaktivierungsvorrichtung (6) ein Temperatursensor (12) zur Erfassung der Temperatur des Stärkekleisters angeordnet ist, mittels dessen Messwerten eine Kreislaufführung oder eine Ableitung des Stärkekleisters in der ersten (4, 7, 21, 22) und/oder zweiten (23) Transportstrecke gesteuert wird.

2. Vorrichtung zum kontinuierlichen enzymatischen Aufschluss von Stärke gemäß Anspruch 1,
**dadurch gekennzeichnet, dass**
der Reaktionsbehälter (2) wenigstens eine Zuführungsleitung (20) aufweist, mittels welcher wenigstens die Stärke, das Wasser und/oder das Enzym als Suspension oder kolloidale Lösung in den Reaktionsbehälter (2) eingebracht werden.

3. Vorrichtung zum kontinuierlichen enzymatischen Aufschluss von Stärke gemäß einem der Ansprüche 1 oder 2, **dadurch gekennzeichnet, dass**
der Reaktionsbehälter (2) wenigstens ein Rührwerk (3) und/oder eine Heizeinrichtung aufweist.

4. Vorrichtung zum kontinuierlichen enzymatischen Aufschluss von Stärke gemäß einem der vorstehenden Ansprüche, **dadurch gekennzeichnet, dass**
die erste Transportstrecke (4, 7, 21, 22) eine Rohrleitung ist, welche insbesondere eine oder zwei Entnahmestellen am Reaktionsbehälter(2) aufweist.

5. Vorrichtung zum kontinuierlichen enzymatischen Aufschluss von Stärke gemäß einem der vorstehenden Ansprüche, **dadurch gekennzeichnet, dass**
die Inaktivierungsvorrichtung (6) insbesondere ein Düsenkocher ist, mit welchem Dampf direkt in den Stärkekleister eingebracht wird.

6. Vorrichtung zum kontinuierlichen enzymatischen Aufschluss von Stärke gemäß einem der vorstehenden Ansprüche, **dadurch gekennzeichnet, dass**
die zweite Transportstrecke (23) eine Rohrleitung ist, welche mit der ersten Transportstrecke (4, 7, 21, 22) über zwei Ventile (13) oder vorzugsweise über ein Dreiwegeventil verbunden ist.

7. Verfahren zum Aufschluss von Stärke mittels Enzymen mit den folgenden Schritten:
- Mischen einer Stärke-Wassersuspension oder eines Stärkekleisters mit einem Enzym;
- Enzymatischer Abbau des Stärkekleisters in einem Reaktionsbehälter (2);
- Entnahme eines Volumenstroms an Stärkekleister aus dem Reaktionsbehälter (2) und Aufheizen des Volumenstroms in einer Inaktivierungsvorrichtung (6);
- Bestimmung der Temperatur des Stärkekleisters in und/oder nach der Inaktivierungsvorrichtung (6) mittels eines Temperatursensors (12) zur Erfassung der Temperatur des Stärkekleisters;
- Rückführung des Volumenstroms an Stärkekleisters in den Reaktionsbehälters (2) bis zum Erreichen einer vorgegebenen Temperatur des Stärkekleisters nach der Inaktivierungsvorrichtung (6);
- Weiterleitung des Volumenstroms an Stärkekleister in einen Vorratsbehälter (11) oder zur Weiterverarbeitung nach Erreichen einer vorgegebenen Temperatur des Stärkekleisters in und/oder nach der Inaktivierungsvorrichtung (6).

8. Verfahren nach Anspruch 7, **dadurch gekennzeichnet, dass**
die Rückführung des Stärkekleisters in den Reaktionsbehälter (2) an einer beliebigen Stelle des Reaktionsbehälters (2) erfolgt, wobei vorzugsweise der Eintrittsort oben im Deckel, seitlich an einer beliebigen Stelle im Mantel oder im Behälterboden angeordnet ist.

9. Verfahren nach einem der Ansprüche 7 oder 8, **dadurch gekennzeichnet, dass**
die vorgegebene Temperatur des Stärkekleisters zur Inaktivierung der Enzyme in und/oder nach der Inaktivierungsstrecke größer 100 °C, bevorzugt 115 °C bis 140 °C und besonders bevorzugt größer 140°C ist.

10. Verfahren nach einem der Ansprüche 7 bis 9, **dadurch gekennzeichnet, dass**
die Temperatur des im Kreislauf geführten Stärkekleisters zwischen 20 °C bis 140 °C liegt.

11. Verfahren nach einem der Ansprüche 7 bis 10, **dadurch gekennzeichnet, dass**
vor dem Abschalten der Anlage wenigstens der Reaktionsbehälter (2) geleert und/oder mit Reinigungswasser gespült wird.

12. Verfahren nach Anspruch 11, **dadurch gekennzeichnet, dass**
bei der Spülung die Inaktivierungsvorrichtung (6) ausgeschalten wird und das Reinigungswasser im Sinne einer Kreislaufführung über die Pumpe (5) und die Inaktivierungsvorrichtung (6) zurück in den Reaktionsbehälter (2) geführt wird, wenn die Temperatur des Spülwassers kleiner gleich 100°C in oder nach der Inaktivierungsvorrichtung (6) ist.

13. Verfahren nach einem der Ansprüche 7 bis 12 zur kontinuierlichen Herstellung von enzymatisch abgebauter Stärke.

14. Vorrichtung nach einem der Ansprüche 1 bis 6 zur Durchführung eines Verfahrens gemäß einem der Ansprüche 7 bis 13.

15. Verwendung der Vorrichtung gemäß einem der Ansprüche 1 bis 6 zur Herstellung einer enzymatisch abgebauten Stärke für den Einsatz in der Papier-, Karton- oder Pappenindustrie, bei Herstellung von Lebensmitteln, Arzneimitteln, Streichfarben und dergleichen.

## Claims

1. A device for continuous enzymatic decomposition of starch, the device comprising a reaction vessel (2) for producing enzymatically degraded starch paste, a first transport section (4, 7, 21, 22) for a volumetric flow of the starch paste, said first transport section including at least one pump (5) and one inactivation device (6) for heating the starch paste, **characterized in that**
the first transport section (4, 7, 21, 22) provides circulation of the starch paste between the reaction vessel (2), the pump (5) and the inactivation device (6), and a second transport section (23) is provided by means of which, downstream from the inactivation device (6), at least a partial flow of the starch paste is transferred from the first transport section (4, 7, 21, 22) into a storage vessel (11) or to further processing,
there being arranged in and/or downstream from the inactivation device (6) a temperature sensor (12) for detecting the temperature of the starch paste, by means of whose measurements circulation or discharge of the starch paste in the first (4, 7, 21, 22) and/or second (23) transport sections is controlled.

2. The device for continuous enzymatic decomposition of starch according to claim 1, **characterized in that**
the reaction vessel (2) has at least one supply line (20) by means of which at least the starch, the water and/or the enzyme are introduced into the reaction vessel (2) as a suspension or colloidal solution.

3. The device for continuous enzymatic decomposition of starch according to either of claims 1 or 2, **characterized in that**
the reaction vessel (2) includes at least one agitator (3) and/or one heater.

4. The device for continuous enzymatic decomposition of starch according to any preceding claim, **characterized in that**
the first transport section (4, 7,21, 22) is a pipeline which includes, in particular, one or two extraction points on the reaction vessel (2).

5. The device for continuous enzymatic decomposition of starch according to any preceding claim, **characterized in that**
the inactivation device (6) is, in particular, a jet cooker by which steam is introduced directly into the starch paste.

6. The device for continuous enzymatic decomposition of starch according to any preceding claim, **characterized in that**
the second transport section (23) is a pipeline which is connected to the first transport section (4, 7, 21, 22) through two valves (13) or preferably through a three-way valve.

7. A method for decomposition of starch using enzymes, the method comprising the steps of:
- mixing a starch-water suspension or a starch paste with an enzyme;
- enzymatic degradation of the starch paste in a reaction vessel (2);
- extracting a volumetric flow of starch paste from the reaction vessel (2) and heating the volumetric flow in an inactivation device (6);
- determining the temperature of the starch paste in and/or downstream from the inactivation device (6) by means of a temperature sensor (12) to detect the temperature of the starch paste;
- returning the volumetric flow of starch paste into the reaction vessel (2) until reaching a predetermined temperature of the starch paste downstream from the inactivation device (6);
- conveying the volumetric flow of starch paste further into a storage vessel (11) or to further processing after reaching a predetermined temperature of the starch paste in and/or downstream from the inactivation device (6).

8. The method according to claim 7, **characterized in that**
the returning of the starch paste into the reaction vessel (2) takes place at any point of the reaction vessel (2), the entry point preferably being arranged in the cover at the top, laterally at any point in the shell or in the vessel bottom.

9. The method according to either of claims 7 or 8, **characterized in that**
the predetermined temperature of the starch paste for inactivating the enzymes in and/or downstream from the inactivation section is greater than 100°C, preferably 115°C to 140°C, and particularly preferably greater than 140°C.

10. The method according to any of claims 7 to 9, **characterized in that**
the temperature of the circulated starch paste is between 20°C to 140°C.

11. The method according to any of claims 7 to 10, **characterized in that**
prior to shutting down the system, at least the reaction vessel (2) is emptied and/or rinsed with cleaning water.

12. The method according to claim 11, **characterized in that**
during rinsing, the inactivation device (6) is shut down and the cleaning water is returned to the reaction vessel (2) through the pump (5) and the inactivation device (6) in the sense of circulation if the temperature of the rinsing water is lower than or equal to 100°C in or downstream from the inactivation device (6).

13. The method according to any of claims 7 to 12 for continuous production of enzymatically degraded starch.

14. The device according to any of claims 1 to 6 for carrying out a method according to any of claims 7 to 13.

15. The use of the device according to any of claims 1 to 6 for production of an enzymatically degraded starch for use in the paper, cardboard or paperboard industry, in production of food, medicine, coating materials and the like.

## Revendications

1. Dispositif de dégradation enzymatique continue d'amidons avec un récipient de réaction (2) pour la création de pâte d'amidon dégradée par voie enzymatique, un premier segment de transport (4, 7, 21, 22) pour un flux volumique de la pâte d'amidon avec au moins une pompe (5) et un dispositif d'inactivation (6) pour le chauffage de la pâte d'amidon, **caractérisé en ce que**
le premier segment de transport (4, 7, 21, 22) met en place un système de circulation de la pâte d'amidon entre le récipient de réaction (2), la pompe (5) et le dispositif d'inactivation (6) et un deuxième segment de transport (23) est prévu, au moyen duquel au moins un flux partiel de la pâte d'amidon est transporté depuis le premier segment de transport (4, 7, 21, 22) vers le dispositif d'inactivation (6) dans un récipient de stockage (11) ou pour un traitement ultérieur,
dans lequel dans et/ou après le dispositif d'inactivation (6), un capteur de température (12) est agencé pour déterminer la température de la pâte d'amidon, dont les valeurs de mesure permettent de commander un système de circulation ou une dérivation de la pâte d'amidon dans le premier (4, 7, 21, 22) et/ou le deuxième (23) segment de transport.

2. Dispositif de dégradation enzymatique continue d'amidons selon la revendication 1, **caractérisé en ce que**
le récipient de réaction (2) présente au moins une conduite d'alimentation (20), au moyen de laquelle au moins les amidons, l'eau et/ou l'enzyme sont introduits sous forme de suspension ou de solution colloïdale dans le récipient de réaction (2).

3. Dispositif de dégradation enzymatique continue d'amidons selon une des revendications 1 ou 2, **caractérisé en ce que**
le récipient de réaction (2) présente au moins un agitateur (3) et/ou un dispositif de chauffage.

4. Dispositif de dégradation enzymatique continue d'amidons selon une des revendications précédentes, **caractérisé en ce que**
le premier segment de transport (4, 7, 21, 22) est un tuyau, qui présente en particulier un ou deux points de sous-tirage sur le récipient de réaction (2).

5. Dispositif de dégradation enzymatique continue d'amidons selon une des revendications précédentes, **caractérisé en ce que**
le dispositif d'inactivation (6) est en particulier une chaudière à buses, avec laquelle la vapeur est directement introduite dans la pâte d'amidon.

6. Dispositif de dégradation enzymatique continue d'amidons selon une des revendications précédentes, **caractérisé en ce que**
le deuxième segment de transport (23) est un tuyau, qui est relié au premier segment de transport (4, 7, 21, 22) par le biais de deux soupapes (13) ou, de préférence, par le biais d'une soupape à trois voies.

7. Procédé de dégradation d'amidons au moyen d'enzymes comprenant les étapes suivantes :
- mélange d'une suspension d'eau et d'amidon ou d'une pâte d'amidon avec une enzyme ;
- dégradation enzymatique de la pâte d'amidon dans un récipient de réaction (2) ;
- prélèvement d'un flux volumique de la pâte d'amidon depuis le récipient de réaction (2) et chauffage du flux volumique dans un dispositif d'inactivation (6) ;
- détermination de la température de la pâte d'amidon dans et/ou après le dispositif d'inactivation (6) au moyen d'un capteur de température (12) afin de déterminer la température de la pâte d'amidon ;
- renvoi du flux volumique de la pâte d'amidon dans le récipient de réaction (2) jusqu'à atteindre une température prédéfinie de la pâte d'amidon après le dispositif d'inactivation (6) ;
- transfert du flux volumique de la pâte d'amidon dans un récipient de stockage (11) ou pour traitement ultérieur jusqu'à atteindre une température prédéfinie de la pâte d'amidon dans et/ou après le dispositif d'inactivation (6).

8. Procédé selon la revendication 7, **caractérisé en ce que**
le renvoi de la pâte d'amidon dans le récipient de réaction (2) s'effectue à un emplacement quelconque du récipient de réaction (2), dans lequel, de préférence, un orifice d'entrée est agencé en haut dans le couvercle, latéralement sur un emplacement quelconque dans le manteau ou dans le fond du récipient.

9. Procédé selon une des revendications 7 ou 8, **caractérisé en ce que**
la température prédéfinie de la pâte d'amidon pour l'inactivation de l'enzyme dans et/ou après le segment d'inactivation est supérieure à 100 °C, de préférence de 115 °C à 140 °C et de manière particulièrement préférée supérieure à 140 °C.

10. Procédé selon une des revendications 7 à 9, **caractérisé en ce que**
la température de la pâte d'amidon transférée dans le circuit est comprise entre 20 °C et 140 °C.

11. Procédé selon une des revendications 7 à 10, **caractérisé en ce qu'**
avant l'arrêt du système, au moins le récipient de réaction (2) est vidé et/ou rincé avec de l'eau de nettoyage.

12. Procédé selon la revendication 11, **caractérisé en ce que**
lors du rinçage, le dispositif d'inactivation (6) est éteint et l'eau de nettoyage est renvoyée dans le récipient de réaction (2) par le biais de la pompe (5) et du dispositif d'inactivation (6) à la manière d'un système de circulation, lorsque la température de l'eau de rinçage est inférieure à 100 °C dans ou après le dispositif d'inactivation (6).

13. Procédé selon une des revendications 7 à 12 pour la fabrication continue d'amidons dégradés par voie enzymatique.

14. Dispositif selon une des revendications 1 à 6 pour la réalisation d'un procédé selon une des revendications 7 à 13.

15. Utilisation du dispositif selon une des revendications 1 à 6 pour la fabrication d'un amidon dégradé par voie enzymatique pour une introduction dans l'industrie du papier, du carton ou du papier carton, lors de la fabrication de produits alimentaires, de médicaments, de colorants d'enduction et analogues.
